# EUROPEAN PATENT APPLICATION

(11) **EP 2 546 618 A1**
(43) Date of publication of application: **16.01.2013**
(21) Application number: 12161988.6
(22) Date of filing: 29.03.2012
(51) Int. Cl.: G01G 17/02, G01G 19/00, G01G 23/01, G01G 19/03

(54) **Weight detecting device and weight detecting method**

(30) Priority: 12.07.2011 JP 2011154234; 22.09.2011 JP 2011206823
(71) Applicant: Kabushiki Kaisha Toshiba, Minato-ku, Tokyo 105-8001 (JP)
(72) Inventor: Asari, Yukio, Tokyo, Tokyo 105-8001 (JP); Todoriki, Toru, Tokyo, Tokyo 105-8001 (JP); Mitsuya, Yusuke, Tokyo, Tokyo 105-8001 (JP); Naruoka, Yoshihiko, Tokyo, Tokyo 105-8001 (JP); Hiramitsu, Naruaki, Tokyo, Tokyo 105-8001 (JP); Fujihara, Hiroaki, Tokyo, Tokyo 105-8001 (JP)
(74) Representative: Horn Kleimann Waitzhofer

(57) **Abstract**

According to one embodiment, a weight detecting device includes a conveying portion (1) to convey a sheet-like article (P), a vibration source (18a, 18b, 20a, 20b, 24) causing the conveying portion to oscillate, a sensor (16) to detect a weight of the sheet-like article (P) while it is being conveyed by the conveying portion (1), an A/D converter portion (6) to sample and digitize an output of the sensor (16) at a predetermined period, and a calculating portion (7) to calculate a weight of the sheet-like article (P) by determining an average of a plurality of detection signal values digitized by the A/D converter portion (6) after subjecting the detection signal values to statistical processing.

## Description

### CROSS-REFERENCE TO RELATED APPLICATION

This application is based on and claims the benefit of priority from Japanese Patent Applications No. 2011-154234, filed on July 12, 2011 and No. 2011-206823, filed on September 22, 2011, the entire contents of which are incorporated herein by reference.

### FIELD

Exemplary embodiments described herein relate to weight detecting devices and weight detecting methods for measuring the weight of sheet-light articles, such as postal matters.

### BACKGROUND

Among sheet processing apparatuses, there are for example mail processing machines that measure the weight of postal matters while they are being conveyed, and determine whether postage indicators, such as stamps, adhered to the postal matters indicate the proper postage. As such a device for measuring the weight while the postal matters are being conveyed, a weight detecting device is known that measures the weight of an entire conveying system, including the postal matter, when the postal matter passes through a conveying system arranged along a conveying path.

In such a weight detecting device, if the conveying speed of the postal matter that is conveyed from the upstream side does not match the conveying speed of the postal matter in the conveying system constituting the weight detecting device, then the conveying system of the weight detecting device yanks out the postal matter, or an impact is applied by the postal matter on the weight detecting device. As a result, the influence of an external force other than the weight is imparted on the sensor detecting the weight, and an unnecessary distortion of the members within the sensor is generated. Moreover, this disruptive external force causes unnecessary vibrations in the weight detecting device. Therefore, the distortions due to this disturbance overlap the distortions of the members within the sensor due to the weight, and the precision with which the weight is detected is lowered.

To measure the weight of the postal matter, the weight of the supporting base supporting the conveying rollers conveying the postal matter is measured, and the weight of the postal matter is measured by detecting the additional weight when the postal matter is placed on and passes the supporting base. In this case, in order to increase the precision with which the weight is measured, one waits for some time after the postal matter is placed on the supporting base until the detection signal has stabilized (until the vibration of the conveying system has attenuated), before measuring the weight of the postal matter.

Moreover, in order to utilize the measurement result with the mail processing system, the measured value is ordinarily output after A/D converting it.

However, in order to ensure the waiting time after the postal matter is placed on the supporting base until the signal has stabilized as noted above, it is necessary to let the postal matter pass over the supporting base at a relatively slow speed, and it is not possible to process a plurality of postal matters by conveying them continuously at high speed.

By contrast, there are methods for measuring with high precision the weight of postal matters that are being conveyed at high speed, but they require a high-performance mechanism for damping vibrations and a control system therefore, and in addition, they require an expensive sensor or the like that can measure the weight of the postal matter with high precision. Therefore, to measure the weight of postal matters while they are being conveyed, the device configuration becomes relatively expensive.

Moreover, it is known that such high-performance measurement systems are ordinarily relatively to external disturbances and have a low durability. Therefore, they are not suited for mail processing machines that process a plurality of postal items by continuously conveying them at high speed.

Moreover, even when the weight of the postal matters is measured with high precision while effectively suppressing vibrations of the conveying system by using expensive equipment, errors are introduced through the digitization by A/D converting the measurement result in order to utilize it with the mail processing system, and the precision of the weight measurement cannot be increased to the desired extent. For this reason, it is possible to increase the weight measurement precision by using an A/D converter board with high resolution, but the device configuration becomes accordingly more expensive.

As a method for increasing the weight measurement precision, it is also conceivable to use highly precise conveying rollers in order to reduce the vibrations acting on the supporting base, but this would also be a reason for increased device costs.

Thus, there is a need for a weight detecting device and a weight detecting method that can measure weight at high precision with a relatively inexpensive configuration.

### SUMMARY OF THE INVENTION

It is an object of the present invention to provide a weight detecting device and a weight detecting method that can continuously detect with high precision the weight of a sheet-like article conveyed with high speed.

### BRIEF DESCRIPTION OF THE DRAWINGS

FIG. 1 is a diagrammatic block diagram of a canceller including a weight detector according to a first embodiment;

FIG. 2 is a top view of the weight detecting device;

FIG. 3 is a front view of the weight detecting device;

FIG. 4 shows a perspective view and a cross-sectional view of a weight sensor of the weight detecting device;

FIG. 5 is a flowchart showing the operation for controlling the conveying speed of the weight detecting device;

FIG. 6 is a front view showing a weight detecting device according to a second embodiment;

FIG. 7 is a top view showing a weight detecting device according to a third embodiment;

FIG. 8 is a front view showing the weight detecting device according to the third embodiment;

FIG. 9 is a flowchart showing the operation for controlling the conveying speed of the weight detecting device according to the third embodiment;

FIG. 10 shows a diagrammatic view of a weight detecting device according to a fourth embodiment;

FIG. 11 is a diagram showing a model of the weight detecting device in FIG. 10;

FIG. 12 is a flowchart illustrating a method for weight measuring with the weight detecting device in FIG. 10;

FIG. 13 is a waveform diagram showing the analog output of the force sensor of the weight detecting device in FIG. 10 and the digitized signal sampled at a predetermined period;

FIG. 14 is a graph showing several distribution examples of digital signals output from the A/D converter board of the weight detecting device in FIG. 10;

FIG. 15 is a graph showing the relation between the degree of skew calculated by the control board of the weight detecting device in FIG. 10 and the degree of reliability of the measurement result; and

FIG. 16 is a waveform diagram for illustrating a conventional measurement method for measuring the weight after the vibrations of the conveying system have attenuated.

### DETAILED DESCRIPTION

In general, according to one embodiment, there is provided a weight detecting device comprising a conveying portion to convey a sheet-like article; a vibration source causing the conveying portion to oscillate; a sensor to detect a weight of the sheet-like article while it is being conveyed by the conveying portion; an A/D converter portion to sample and digitize an output of the sensor at a predetermined period; and a calculating portion to calculate a weight of the sheet-like article by determining an average of a plurality of detection signal values digitized by the A/D converter portion after subjecting the detection signal values to statistical processing.

Referring to the accompanying drawings, the following is a detailed explanation of embodiments.

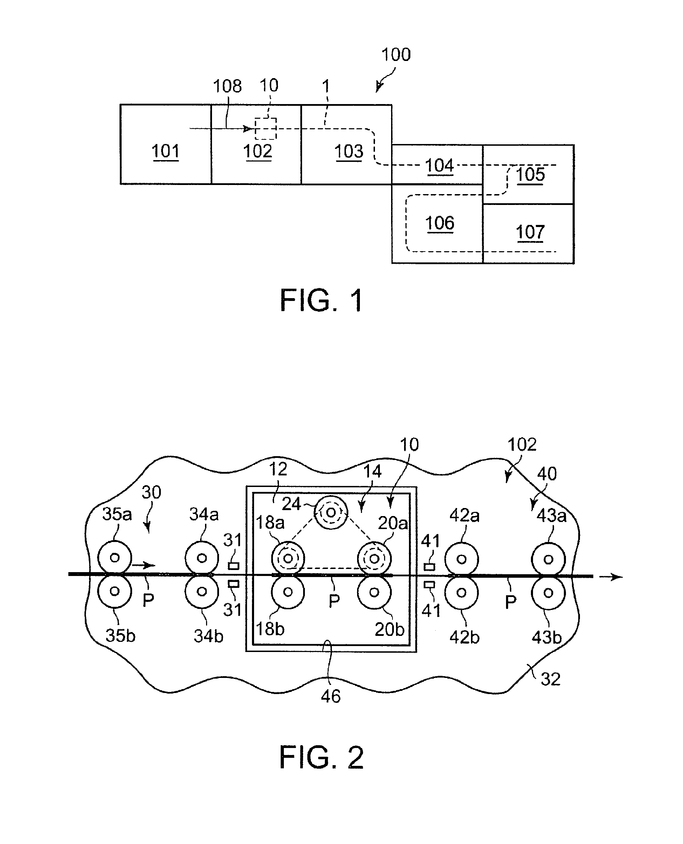

(First Embodiment) FIG. 1 shows a diagrammatic block diagram of a culler-facer-canceller 100 (referred to in the following simply as "canceller 100"), which serves as an example of a sheet processing apparatus provided with a weight detector according to a first embodiment. As shown in FIG. 1, the canceller 100 includes a supply portion 101, a mechanical detector 102, an OCR scanner 103, a twist and reverse portion 104, a switchback portion 105, an imprinting portion 106, and a sorting and stacking portion 107, arranged in the conveying direction of postal matters P serving as sheet-like articles. The canceller 100 further includes a conveying structure 108, which conveys the postal matters P along a conveying path 1 through the above-mentioned units. The canceller 100 also includes an operation panel not shown in the drawings, with which commands for various operations can be given to the apparatus, with which the operation mode can be switched and which displays warning messages and the like.

The supply portion 101 receives for example a batch of standardized postal matters P whose thickness, length in conveying direction, width in a direction perpendicular to the conveying direction and weight lie within a predetermined range, takes out these postal matters one by one and supplies them to the downstream processing units. The conveying structure 108 conveys the postal matters P supplied to it through the following processing portions 102 to 107.

The mechanical detector 102 detects metal, foreign items and hard items contained in the postal matters P that are conveyed along it, detects double take-outs, in other words overlapped feeding, of postal matters P, as well as short gaps, and rejects postal matters P that are judged to be not processable by the downstream processing portions 103 to 107 to a rejection sheet stacker, which is not shown in the drawings. It should be noted that the mechanical detector 102 includes a weight detecting device, described later, which detects the weight of the conveyed postal matters P.

The mechanical detector 102 furthermore detects in advance the length in conveying direction or the width of a postal matter P before it reaches the weight measuring device, detects the passing of the front edge and the passing of the rear edge of the postal matter P with a timing sensor explained later, and obtains, in advance, information relating to the conveying position of this postal matter P.

The OCR scanner 103 optically reads the surface of the postal matter P, converting it into an electric signal, and obtains sorting information, such as the postal code or the address written on the postal matter P, as an image. Moreover, the OCR scanner 103 detects the presence and the position of any postage stamps (this also includes any charge imprints including fee indicators or the like) attached to the postal matter P. Since the orientation (front/rear, top/bottom) of the postal matter P supplied through the supply portion 101 is not the same for all postal matter P, the OCR scanner portion 103 includes at least two scanner units to read both sides of the postal matter P.

The twist and reverse portion 104 includes a twisting path, not shown in the drawings, that conveys the postal matters P while twisting them by 180° around their central axis, which extends along the conveying direction of the postal matters P. That is to say, the twist and reverse portion 104 flips over the postal matters P without changing their conveying direction. The twist and reverse portion 104 also includes a detour diverting path (straight path) (not shown in the drawings) for diverting postal matters P transported into it without transporting them to the twisting path.

The switchback portion 105 includes two switchback mechanisms (not shown in the drawings) that reverse the conveying direction of the postal matters P by receiving conveyed postal matters P and outputting them in the opposite direction. Like the twist and reverse portion 104 described above, also the switchback portion 105 includes a diverting path (straight path) for circumventing the two switchback mechanisms.

The imprinting portion 106 includes an imprinting hub not shown in the drawing, which rotates while contacting one surface of the conveyed postal matter P. The imprinting portion 106 imprints a cancellation mark while rotating this imprinting hub in contact with the position of the postage stamp. In the present embodiment, all postal matters P conveyed to the imprinting portion 106 are aligned with respect to front/rear and top/bottom by passing through the twist and reverse portion 104 and the switchback portion 105, so that the imprinting hub is provided only on one side of the conveying path 1.

The sorting and stacking portion 107 sorts and stacks postal matters P to a predetermined sorting position in accordance with the sorting information detected with the OCR scanner 103. Moreover, the sorting and stacking portion 107 includes a rejection sheet stacker not shown in the drawings, which prohibits the imprinting with the imprinting portion 106, of postal matters P that are temporarily held in the switchback portion 105 and then transported forward, and which rejects such postal matters P.

The canceller 100 judges whether the postage mark, such as a stamp, read from the postal matter P with the OCR scanner 103 corresponds to the proper postage in view of the weight of the postal matter P as measured with the above-noted weight measuring device, and rejects postal matters P that are judged to have insufficient postage, without stamping a cancellation mark on them with the imprinting portion 106.

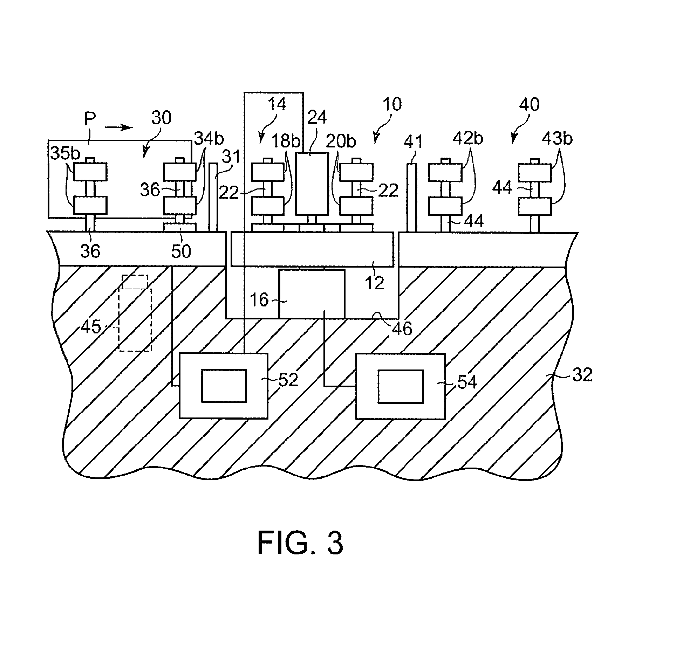

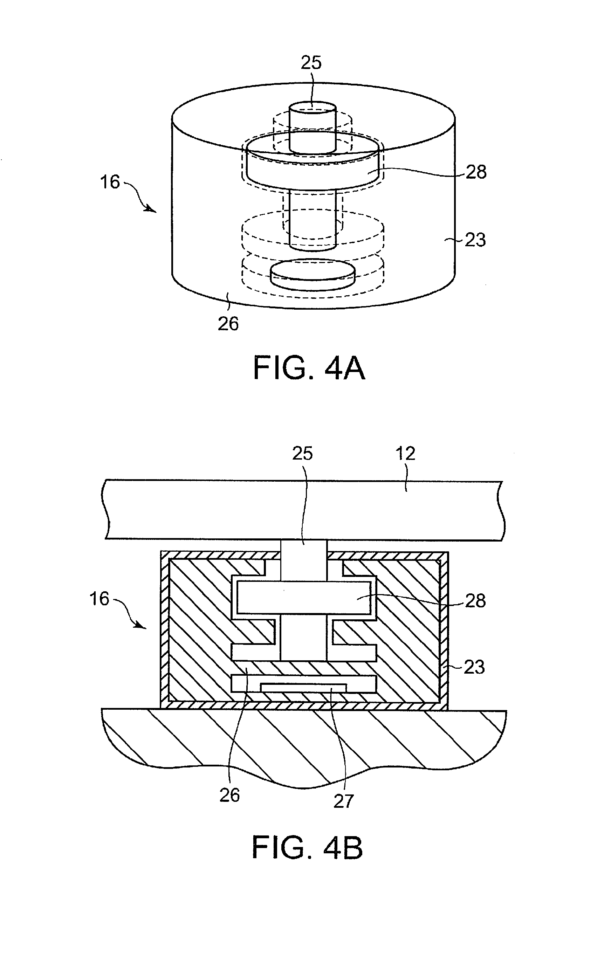

The following is a detailed explanation of the weight detecting device 10. FIG. 2 is a top view of the weight detecting device 10 in accordance with the first embodiment, which detects (measures) the weight of a postal matter P passing by the mechanical detector 102 on the conveying path 1. FIG. 3 is a side view of the weight detecting device. FIG. 4 shows a weight sensor in the weight detecting device.

The weight detecting device 10 according to this embodiment is able to successively measure the weight of a plurality of postal matters P that are conveyed continuously at relatively high speed along the conveying path 1, without stopping or slowing down the conveyance of the postal matters P. In the present embodiment, the postal matters P passing along the mechanical detector 102 including the weight detecting device 10 are conveyed in an upright orientation on the conveying path 1, that is, with the conveying plane extending in the vertical direction.

As shown in FIG. 1 and FIG. 2, the mechanical detector 102 includes an upstream-side conveying structure 30 conveying postal matters P in an upright orientation along the conveying path 1, and a downstream-side conveying structure 40 also conveying postal matters P in an upright orientation along the conveying path 1. The weight detecting device 10 is arranged on the conveying path 1 between the upstream-side conveying structure 30 and the downstream-side conveying structure 40, receives postal matters P that are conveyed to it from the upstream-side conveying structure 30, and after detecting the weight of the postal matters P, passes the postal matters P on to the downstream-side conveying structure 40.

The upstream-side conveying structure 30 includes two pairs of conveying rollers 34a, 34b and 35a, 35b arranged on a base 32 of the mechanical detector 102. The conveying rollers are attached to rotary shafts 36 that are erected substantially vertically on the base 32, and they are able to rotate unitarily with the rotary shafts. The pairs of conveying rollers 34a, 34b and 35a, 35b are arranged next to and facing each other, conveying postal matters P sandwiched between them. The two pairs of conveying rollers 34a, 34b and 35a, 35b are arranged along the conveying path 1 at a distance that is slightly shorter than the length of the shortest postal matter. Moreover, the upstream-side conveying structure 30 includes an injection motor 45 that rotates the rotary shafts of the conveying rollers, and by rotating the conveying rollers, the postal matter P sandwiched between the conveying rollers is conveyed at a predetermined conveying speed. Downstream from the upstream-side conveying structure 30, a passage sensor 31 is provided that detects the passage of postal matters P.

Similarly, also the downstream-side conveying structure 40 includes two pairs of conveying rollers 42a, 42b and 43a, 43b arranged on a base 32 of the mechanical detector 102. The conveying rollers are attached to rotary shafts 44 that are erected substantially vertically on the base 32, and they are able to rotate unitarily with the rotary shafts. The pairs of conveying rollers 42a, 42b and 43a, 43b are arranged next to and facing each other, conveying postal matters P sandwiched between them. The two pairs of conveying rollers 42a, 42b and 43a, 43b are arranged along the conveying path 1 at a distance that is slightly shorter than the length of the shortest postal matter. Moreover, the downstream-side conveying structure 40 includes an injection motor or the like that rotates the rotary shafts of the conveying rollers, and by rotating the conveying rollers, the postal matter P sandwiched between the conveying rollers is conveyed at a predetermined conveying speed. The driving injection motor may also be the same injection motor as for the upstream-side conveying structure 30. Near the upstream side of the downstream-side conveying structure 40, a passage sensor 41 is provided that detects the passage of postal matters P.

Between the upstream-side conveying structure 30 and the downstream-side conveying structure 40, the weight detecting device 10 includes a support member 12 that is arranged independently via a gap within a recess 46 formed in the upper side of the base 32, a detector-side conveying structure 14 arranged above the support member 12, conveying postal matters P while sandwiching them with rotating members, and a weight sensor 16 that detects the weight of the conveying structure 14 and the support member 12 while conveying a postal matter.

The support member 12 is for example rectangular plate-shaped, and is arranged such that its upper surface is substantially flush with the upper surface of the base 32, constituting a portion of the conveying path 1. The conveying structure 14 includes two pairs of conveying rollers 18a, 18b and 20a, 20b that are arranged on the support member 12. The conveying rollers are attached to rotary shafts 22 that are erected substantially vertically on the support member 12, and they are able to rotate unitarily with the rotary shafts. The pairs of conveying rollers 18a, 18b and 20a, 20b are arranged next to and facing each other, conveying postal matters P sandwiched between them. The two pairs of conveying rollers 18a, 18b and 20a, 20b are arranged along the conveying path 1 at a distance that is slightly shorter than the length of the shortest postal matter. Moreover, the conveying structure 14 includes a servomotor 24 or the like that is placed on the support member 12 and rotates the rotation shafts 44 of the conveying rollers. By rotating the conveying rollers 18a, 18b and 20a, 20b, the postal matter P sandwiched between the conveying rollers is conveyed at a predetermined conveying speed.

The weight sensor 16 is for example a force sensor that is installed on the bottom surface of the recess 46 formed in the base 32, the support member 12 being placed on the weight sensor 16. As shown in FIG. 4, the weight sensor 16 includes a hollow cylindrical case 23 that is closed at both ends, a detecting rod 25 that is provided within the case 23 such that it can be moved in the vertical direction, a flexure portion (diaphragm) 26 that is provided in contact with the lower end of the detecting rod 25, and a flexure detecting portion 27 that is arranged facing the flexure portion at a gap and that contactlessly detects a flexure (displacement) of the flexure portion. The upper end of the detecting rod 25 protrudes upward from the case 23, and the support member 12 is fixed to and supported by the upper end of the detecting rod 25. A stopper 28 that limits the movement of the detecting rod 25 and prevents it from being damaged is provided at the middle portion of the detecting rod 25. When the detecting rod 25 receives the load of the support member 12, the conveying structure 14 and the postal matter P, the flexure portion 26 flexes, and by detecting this flexure with the flexure detecting portion 27, the load, that is, the weight is detected.

As shown in FIG. 3, the weight detecting device 10 includes an encoder 50, a control device 52 and an arithmetic device 54. The encoder 50 serves as a detector for detecting the conveying speed of the postal matter P at least at the upstream-side conveying structure 30 and detects the rotation speed of the rotary shafts 36 of the rollers. Based on speed information obtained with the encoder 50, the control device 52 controls the conveying speed of the conveying structure 14 such that the conveying speed of the postal matter P due to the conveying structure 14 matches the detected conveying speed. The arithmetic device 54 processes the detection signal of the weight sensor 16 and measures the weight.

Based on the detection signal from the encoder 50, the control device 52 calculates the conveying speed of the postal matter P at the upstream-side conveying structure 30, and controls the rotation speed of the servomotor 24 of the weight detecting device 10 in accordance with this calculated conveying speed. The arithmetic device 54 detects the total weight of the weight detecting device 10 and the postal matter P while the postal matter P passes through the weight detecting device 10, and calculates the weight of the postal matter P by subtracting the weight of the weight detecting device 10 from this total weight.

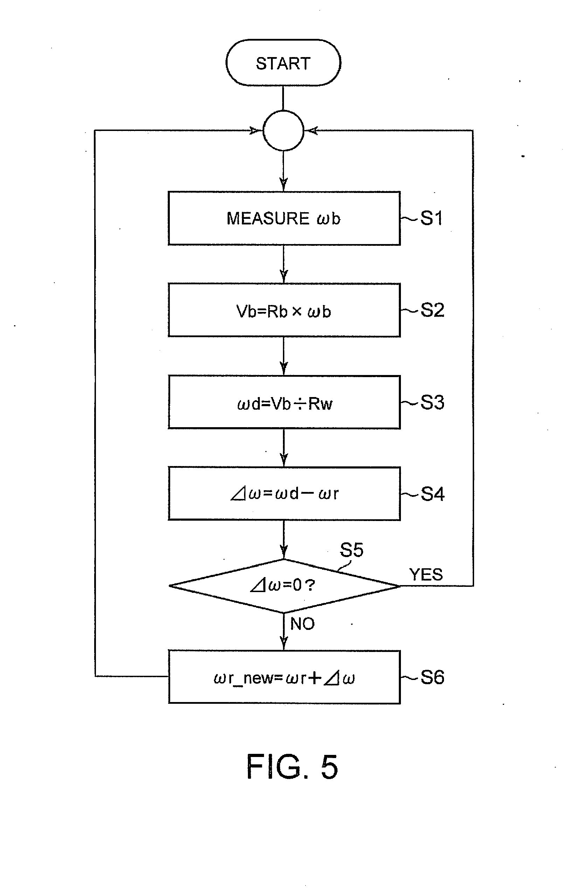

The following is an explanation of the operation of the weight detecting device 10 configured as described above. With the operation start of the canceller 100, the upstream side conveying structure 30, the downstream side conveying structure 40 and the conveying structure 14 of the weight detecting device 10 are respectively driven at a predetermined conveying speed. As shown in FIG. 5, based on the detection signal from the encoder 50, the control device 52 of the weight detecting device 10 measures the rotation speed ωb of the conveying rollers 34a and 34b in the upstream side conveying structure 30 (S1), and calculates the conveying speed Vb (= ωb × Rb) of the postal matter P at the upstream side conveying structure 30 from the rotation speed ωb and the radius Rb of the conveying rollers 34a and 34b. Furthermore, the control device 52 calculates the rotation speed of the conveying rollers 18a, 18b, 20a, 20b for matching the conveying speed of the postal matter P at the conveying structure 14 of the weight detecting device 10 with the conveying speed Vb of the postal matter P at the upstream side conveying structure 30, that is, the rotation speed ωd to be realized (ωd = Vb / Rw) from the calculated conveying speed Vb and the radius Rw of the conveying rollers 18a, 18b, 20a, 20b of the weight detecting device 10 (S3).

Next, the control device 52 determines the difference Δω between the calculated rotation speed ωd to be realized and the actual rotation speed ωr of the conveying rollers 18a, 18b, 20a, 20b (S4), and detects whether this difference Δω is zero or not (S5). It should be noted that the actual rotation speed ωr of the conveying rollers 18a, 18b, 20a, 20b can be obtained by detecting the rotation speed of the servo motor 24 of the conveying structure 14 with the control device 52. If the difference Δω is zero, that is, if the conveying speed of the postal matter with the upstream side conveying structure 30 matches the conveying speed of the postal matter with the conveying structure 14 of the weight detecting device 10, then the control device 52 repeats the operations S1 to S5. And if the difference Δω is not zero, that is, if the conveying speed of the postal matter with the upstream side conveying structure 30 does not match the conveying speed of the postal matter with the conveying structure 14 of the weight detecting device 10, then the control device 52 controls the rotation speed of the servomotor 24 and adjusts the rotation speed ωr of the conveying rollers 18a, 18b, 20a and 20b to a rotation speed ωnew = ωb + Δω at which the difference Δω becomes zero (S6). Thus, during the operation of the device, the control device 52 controls the conveying speed of the conveying structure 14, based on the conveying information obtained with the encoder 50, in such a manner that the conveying speed of the postal matter P with the conveying structure 14 of the weight detecting device 10 matches the conveying speed with the upstream side conveying structure 30.

The weight detecting device 10 takes in the postal matters P that are sent from the upstream side conveying structure 30, conveys the postal matters P with the conveying structure 14 as explained above at a conveying speed that is the same as that of the upstream side conveying structure 30, and furthermore feeds the postal matter P to the downstream side conveying structure 40. At this time, the weight detecting device 10 performs a weight detection from the point in time when the rear edge of the postal matter P has been detected by the passage sensor 31 of the upstream side conveying structure 30 to the time when the front end of the postal matter P is detected by the passage sensor 41 of the downstream side conveying structure 40. That is to say, the weight detecting device 10 carries out a weight detection while the postal matter P is sandwiched by the conveying rollers 18a, 18b, 20a and 20b and moved over the support member 12. While the postal matter P passes the weight detecting device 10, the arithmetic device 54 calculates the weight of the postal matter P by detecting the total weight of the support member 12, the conveying structure 14 and the postal matter P through the detection signal of the weight sensor 16, and subtracting the previously stored weight of the support member 12 and the conveying structure 14 from the total weight.

With the weight detecting device 10 configured as described above, by matching the conveying speed of the postal matters at least on the upstream side conveying structure 30 of the weight detecting device to the conveying speed of the postal matters at the conveying structure 14 of the weight detecting device when measuring the weight of postal matters while they are being conveyed at high speed and high density, it is possible to alleviate the tension of the postal matters at the conveying structure 14 of the weight detecting device and the disturbing external forces at the weight measurement due to collisions of postal matters. As a result, distortions due to disturbing external forces other than distortions due to weight in the internal members of the weight sensor 16 that measures the weight are alleviated, and there are no unnecessary vibrations in the weight detecting device, so that it is possible to continuously detect the weight of postal matters conveyed at high speed and high density with high precision.

The following is an explanation of a weight detecting device according to another embodiment. It should be noted that in the embodiments explained in the following, portions that are the same as in the first embodiment explained above are given the same reference numerals and their further explanation is omitted, focusing on aspects that are different to the first embodiment.

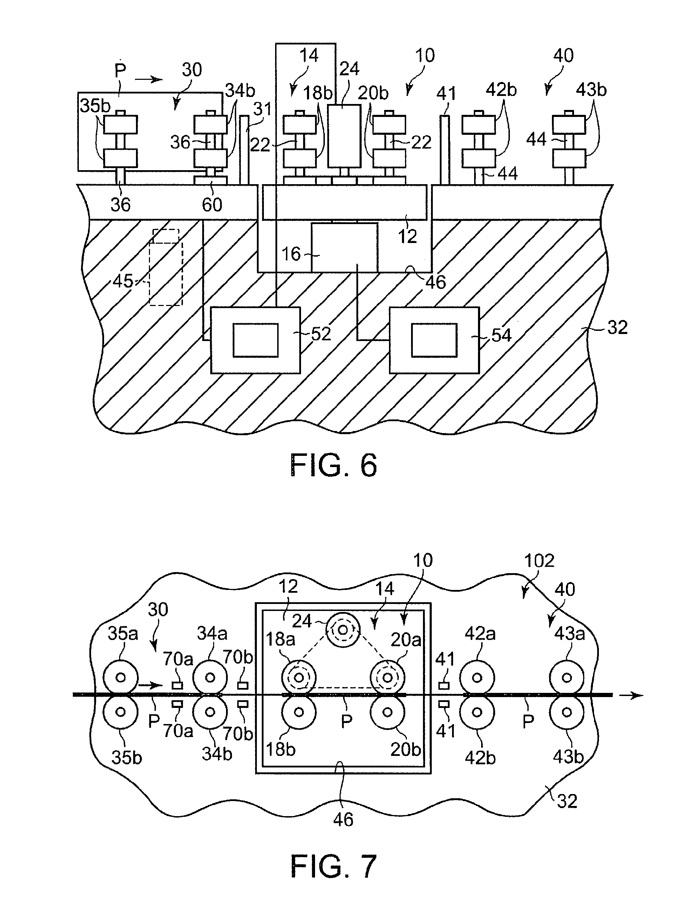

(Second Embodiment) FIG. 6 shows a weight detecting device according to a second embodiment. In the above-described first embodiment, an encoder was used as the detection device for detecting the conveying speed of the upstream side conveying structure, but there is no limitation to this, and it is also possible to use other types of detectors. As shown in FIG. 6, the weight detecting device 10 according to the second embodiment includes a tachogenerator 60 as the detector. This tachogenerator 60 generates a voltage that is proportional to the rotation speed of the rotary shafts 36 of the conveying rollers 34a, 34b at the upstream side conveying structure 30 to detect this rotation speed (angular speed). Based on the rotation speed detected by the tachogenerator 60, the control device 52 calculates the conveying speed of the postal matters P with the upstream side conveying structure 30, and controls the driving motor 24 of the conveying structure such that this conveying speed matches the conveying speed of the postal matter with the conveying structure 14 of the weight detecting device 10.

### Third Embodiment

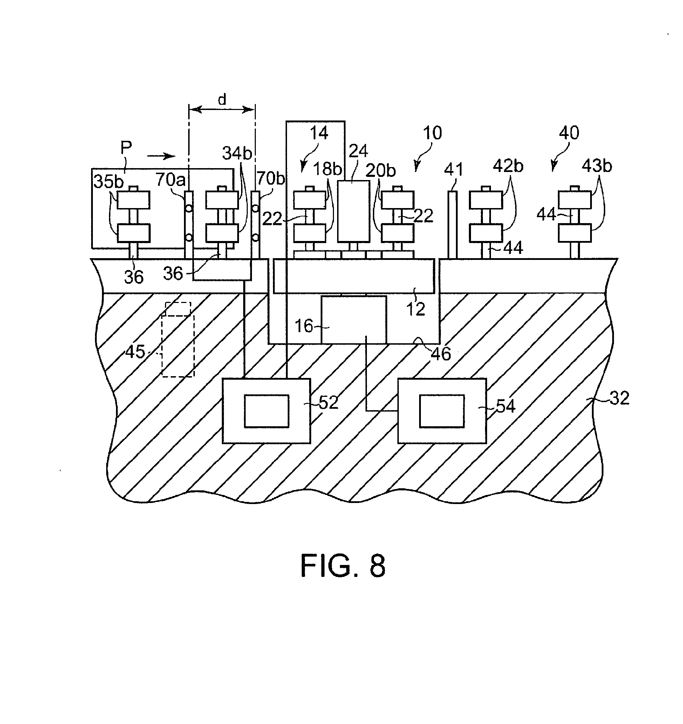

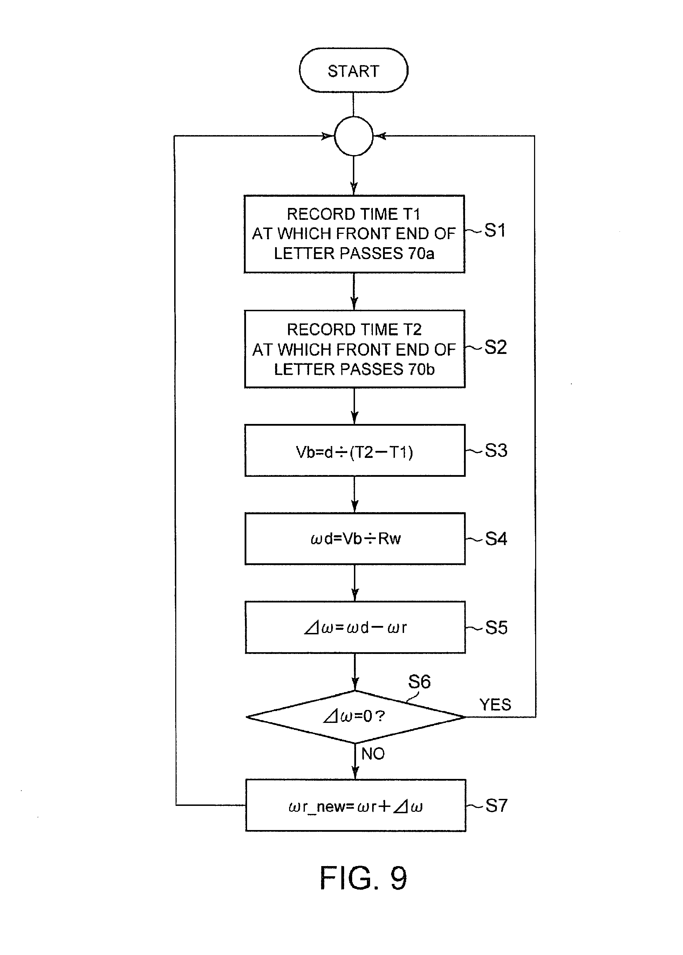

FIGS. 7 and 8 show a weight detecting device 10 according the third embodiment, and FIG. 9 is a flowchart showing the detecting and control operation for the conveying speed. As shown in FIGS. 7 and 8, in the third embodiment, the weight detecting device 10 includes two sets of optical sensors 70a and 70b as the detectors. For example, one set of optical sensors 70a is arranged sandwiching the conveying path 1 on the upstream side of the conveying roller 34a of the upstream side conveying structure 30, the other set of optical sensors 70b is arranged sandwiching the conveying path 1 on the downstream side of the conveying roller 34a of the upstream side conveying structure 30. The two sets of optical sensors 70a and 70b respectively detect the passage of postal matters P that are conveyed along them, that is to say, they detect the front ends of the postal matters P. The optical sensors 70a and 70b are arranged at a spacing d along the conveying path 1.

As shown in FIG. 9, to control the conveying speed, first, the front end of a postal matter (such as a letter) that is conveyed by the upstream side conveying structure 30 is detected by the optical sensor 70a, and the control device 52 stores the time T1 at which the postal matter passes the optical sensor 70a (S1). Moreover, the control device 52 detects the front end of the postal matter P with the optical sensor 70b, and stores the time T2 at which the postal matter passes the optical sensor 70b. The control device 52 calculates the conveying speed Vb (= d / (T2 - T1)) of the postal matter P at the upstream side conveying structure 30 from the detected times T1, T2 and the distance d between the optical sensors 70a and 70b.

Furthermore, the control device 52 calculates the rotation speed of the conveying rollers 18a, 18b, 20a and 20b in order to match the conveying speed Vb of the postal matter P at the upstream side conveying structure 30 to the conveying speed of the postal matter P at the conveying structure 14 of the weight detecting device 10, that is, the rotation speed ωd to be realized is calculated from the calculated conveying speed Vb and the radius Rw of the conveying rollers 18a, 18b, 20a and 20b of the weight detecting device 10 (ωd = Vb / Rw) (S4).

Next, the control device 52 determines the difference Δω between the calculated rotation speed ωd to be realized and the actual rotation speed ωr of the conveying rollers 18a, 18b, 20a and 20b (S5), and it detects whether this difference Δω is zero or not (S6). It should be noted that the actual rotation speed ωr of the conveying rollers 18a, 18b, 20a and 20b can be obtained by detecting the rotation speed of the servomotor 24 of the conveying structure 14 with the control device 52.

If the difference Δω is zero, that is, if the conveying speed of the postal matter at the upstream side conveying structure 30 matches the conveying speed of the postal matter at the conveying structure 14 of the weight detecting device 10, then the control device 52 repeats the operations S1 to S5. And if the difference Δω is not zero, that is, if the conveying speed of the postal matter at the upstream side conveying structure 30 does not match the conveying speed of the postal matter at the conveying structure 14 of the weight detecting device 10, then the control device 52 controls the rotation speed of the servomotor 24 and adjusts the rotation speed ωr of the conveying rollers 18a, 18b, 20a and 20b to a rotation speed ωnew = ωb + Δω at which the difference Δω becomes zero (S7). Thus, during the operation of the device, the control device 52 controls the conveying speed of the conveying structure 14, based on the conveying information obtained with the optical sensors 70a and 70b, in such a manner that the conveying speed of the postal matter P at the conveying structure 14 of the weight detecting device 10 matches the detected conveying speed at the upstream side conveying structure 30.

In the second and third embodiments, the configuration of other parts than the weight detecting device 10 is the same as in the above-described first embodiment. Moreover, also in the second and third embodiments, a weight detecting device is obtained that is capable of continuously detecting with high precision the weight of postal matters conveyed at high speed and high density.

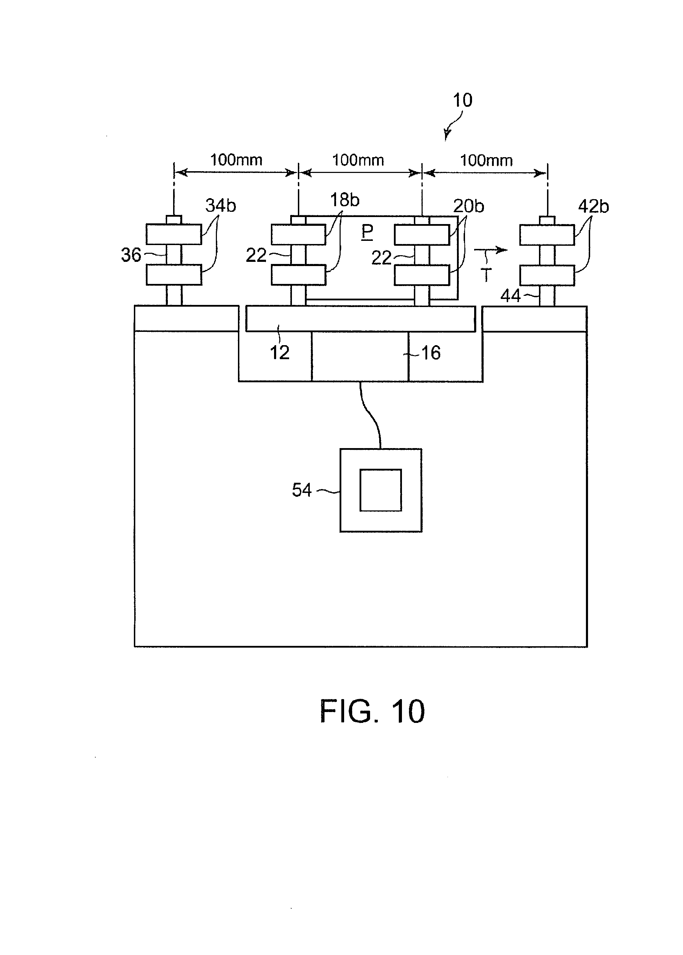

Furthermore, a weight detecting device 10 for measuring the weight of sheet-like articles is explained with reference to FIGS. 10 to 16.

(Fourth Embodiment) Referring to the accompanying drawings, the following is a detailed explanation of a fourth embodiment. FIG. 10 shows a diagrammatic view of a weight detecting device 10 according to this embodiment. In the present embodiment, an apparatus is explained that conveys at relatively high speeds postal matters P (sheet-like articles) such as postcards or envelopes, and measures their weight. It should be noted that this weight detecting device 10 measures the weight of the postal matters P without stopping the conveyance of the postal matters P.

The weight detecting device 10 includes a conveying path 1 that conveys the postal matters P in their longitudinal direction in an upright manner, and includes a plurality of conveying roller pairs 2 (conveying portions) that are arranged at equidistant spacing (a spacing of 100 mm in the present embodiment) along the conveying path 1. In FIG. 10, only four conveying roller pairs 34b, 18b, 20b and 42b are shown, but more conveying rollers and conveyor belts may be arranged on the conveying path 1.

It should be noted that the spacing in conveying direction between the plurality of conveying roller pairs 2 arranged along the conveying path 1 may be set to a distance that is at least shorter than the postal matter P whose length in conveying direction is the shortest, out of all postal matters P whose weight is to be measured with the weight detecting device 10. By setting the spacing among the conveying roller pairs 2 in this manner, all postal matters P are transferred among conveying roller pairs 2 while being clamped by at least one conveying roller pair 2.

Moreover, the conveying roller pairs 2 are each combinations of two conveying rollers that face each other across the conveying path 1, and two roller portions are provided at a certain distance in axial direction (in vertical direction in the drawing) on the rotary shafts 36 and 22 of the conveying rollers. Furthermore, the rotary shafts 36 and 22 of the conveying rollers extend in vertical direction and their lower ends are supported by the base 32. Note that in FIG. 10, only the conveying rollers to the front side of the conveying path 1 are shown.

The two conveying roller pairs 18b and 20b in the middle of FIG. 10 are attached to the support member 12, and are oscillate by a motor 24. Moreover, together with the two conveying roller pairs 18b and 20b and the motor 24, this support member 12 is placed on a weight sensor 16 for detecting the weight of the postal matters P while they are being conveyed.

That is to say, in a state in which the postal matters P that are conveyed along the conveying path 1 are clamped by at least one of the two pairs of conveying roller pairs 18b and 20b that are attached to the support member 12, the weight of the entire configuration on the weight sensor 16 is detected, measuring the weight of the postal matters, which corresponds to the increase in weight beyond the weight when no postal matter P is being conveyed.

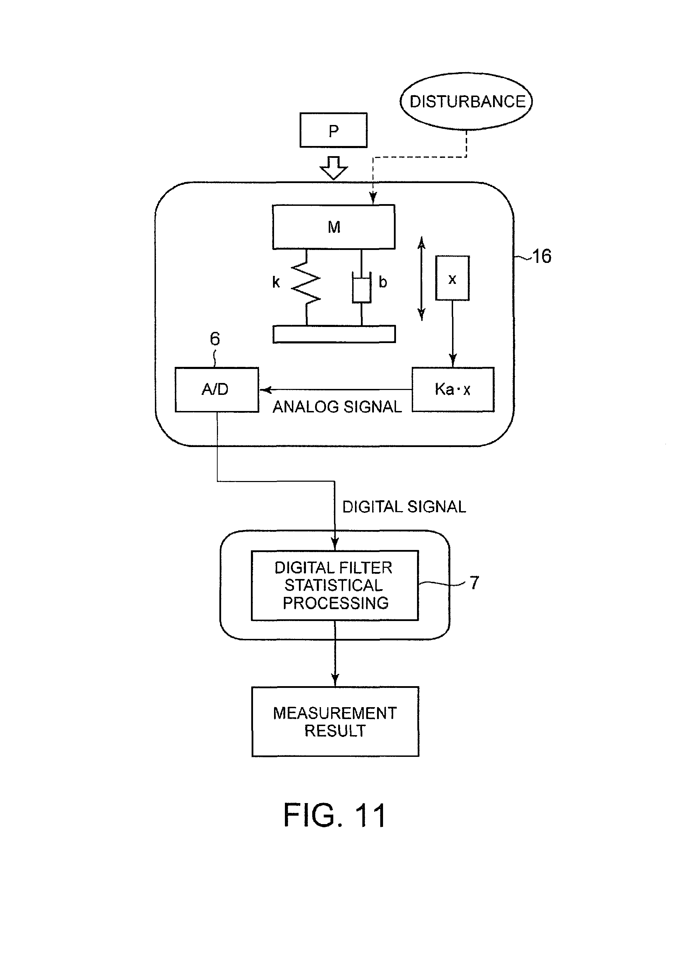

More specifically, the weight detecting device 10 is provided with an A/D converter board 6 (see FIG. 11) that samples the output of the weight sensor 16 at a predetermined period and digitizes the sampled analog signals. Moreover, the weight detecting device 10 includes a control board 7 (calculation portion) that calculates the weight of the corresponding postal matter P by statistically processing and averaging the plurality of digital signals that have been digitized with the A/D converter board 6.

FIG. 11 is a diagram showing a model of the weight detecting device 10 in FIG. 10. As shown in FIG. 11, the weight sensor 16 can be modeled with its stiffness K and its viscosity b, and the conveying roller pairs 18b and 20b, the motor 24, the support member 12 and the weight sensor 16 can be modeled as a mass M. When the mass of the postal matter P is added to this mass M, a disturbance is applied. The displacement X of the weight sensor 16 is input as the sensor output (analog signal) into the A/D converter board 6. The A/D converter board 6 digitizes this analog signal (A/D conversion) and inputs it into the control board 7. Then, the digital signal input from the A/D converter board 6 is statistically processed and averaged with the control board 7, and the weight of the postal matter P is output as the measurement result.

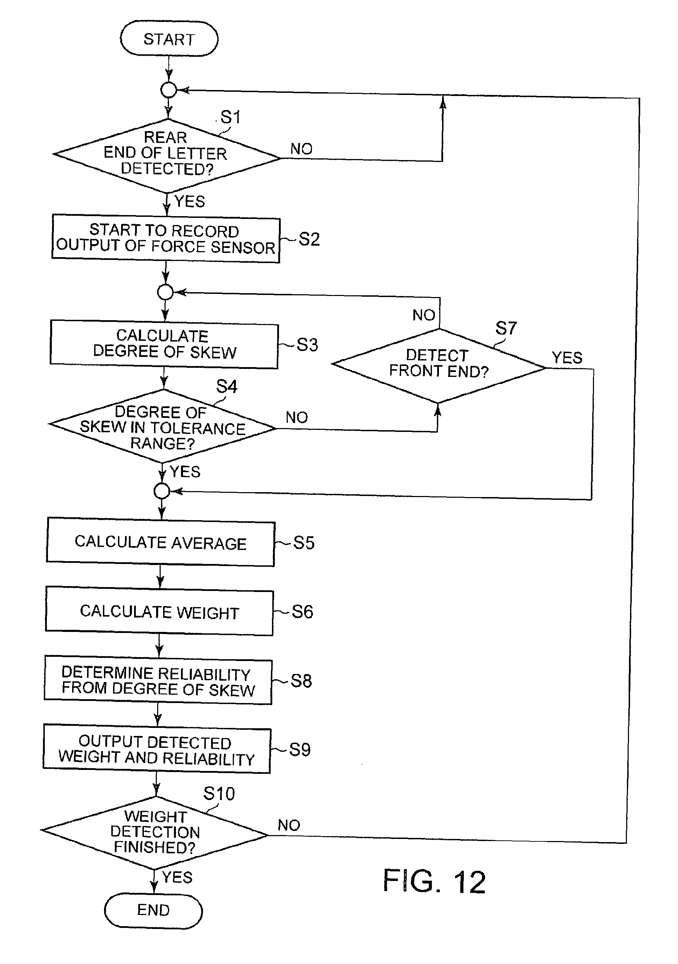

Referring to FIGS. 12 to 16, the following is a more detailed explanation of a method for measuring the weight with this weight detecting device 10. A plurality of postal matters P are continuously conveyed on the conveying path 1 in the direction of arrow T in FIG. 10, and successively pass the weight detecting device 10. At this time, the passage of the rear edge in conveying direction of the postal matters P is detected by a sensor not shown in the drawings, and it is determined that the rear edge in conveying direction of the postal matters P has passed the conveying nip of the conveying roller pair 34b that is one to the upstream side of the conveying roller pair 18b on the support member 12 (FIG. 12, Step 1: YES). At this point in time, the entire weight of that postal matter P rests completely on the support member 12, and the weight of the postal matter P can be measured.

In particular, in the present embodiment, after the postal matter P has been placed on the support member 12, sampling of the signals is not delayed until vibrations in the conveying system are attenuated and abated, so that the sampling of the signals can be started immediately after the detection of the rear edge in Step 1. In other words, in the present embodiment, the postal matter P continues to oscillate during its conveyance, with the motor 24 and the conveying roller pairs 18b and 20b as the vibration source, and the weight of the postal matter P is measured in a state in which it is oscillating. That is to say, with the present embodiment, compared to the case that the vibrations are attenuated, the time at which the sampling is started can be expedited, and the amount of signals that can be sampled can be increased accordingly.

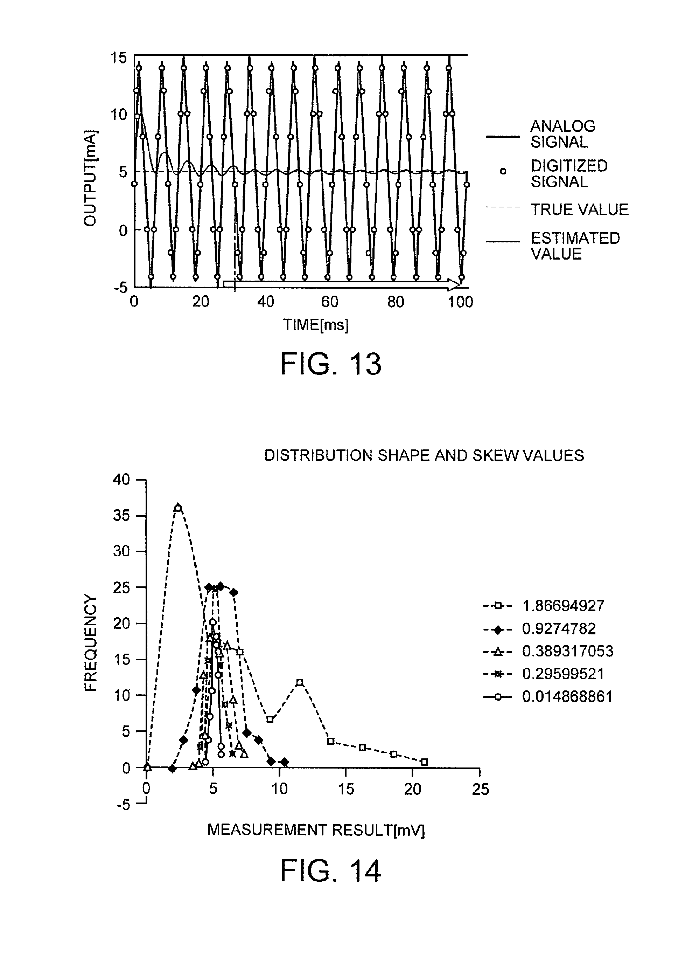

That is to say, after the postal matter P has been placed on the support member 12, the output of the weight sensor 16 is sampled with the A/D converter board 6 at a predetermined period, the output values (analog signal) are digitized (A/D converted) by the A/D converter board 6 and turned into a digital signal (Step 2). FIG. 13 shows, as a graph, an example of the signal waveform of the analog output of the weight sensor 16 and the digitized signal. As can be seen, in the present embodiment, vibrations of the conveying system are not attenuated. That is to say, the weight detecting sensor 10 of the present embodiment is not provided with a vibration suppressing mechanism that suppresses vibrations in the conveying system.

In the present embodiment, the sampling period of the sensor output at that time, that is, the period of the digitized signal is set to less than 1/2 the vibration period of the conveying system, which depends mainly on the rotation speed of the conveying roller pairs 18b and 20b. Thus, the vibration components due to the conveying system can be separated.

Furthermore, in the present embodiment, vibrations with an amplitude that exceeds the sampling resolution when digitizing the output of the weight sensor 16 are continuously applied via the conveying system to the postal matters P to be measured, and a large number of measured values centering around the true values is collected, and by averaging these, a measurement of the weight exceeding the sampling error becomes possible. Note that in the present embodiment, the vibration frequency of the conveying system can be adjusted to the desired value by changing the radius of the roller portions of the conveying roller pairs 18b and 20b, for example. That is to say, the vibration frequency of the conveying system caused by the conveying roller pairs 18b and 20b, which are the source of vibrations, can be set to a value that is removed from the resonance frequency of the entire conveying system.

The digital signals that have been digitized in Step 2 are input into the control board 7 and stored, and every time they are input, their average value is calculated and the estimation value of the weight is renewed. As shown by their change over time shown in the graph in FIG. 13, ideally the estimation value of the weight gradually approaches the actual weight (true value) of the postal matter P as the sampling number of the signal increases.

However, in the present embodiment, the average value of the signal that is input from the A/D'converter board 6 is not simply calculated with the control board 7, but the weight of the postal matter P is calculated after applying a digital filter to the signal that is input from the A/D converter board 6 followed by further statistical processing. With this filter processing, noise components, such as external disturbances, can be canceled, and aberrant values can be eliminated by the statistical processing, and a weight measurement that is even closer to the true value becomes possible. FIG. 14 shows several distribution examples of measurement values (digitized digital signals) recorded with the control board 7.

Ideally, the vibrations of the conveying system are symmetric, oscillating around the weight (including the weight of the postal member P), but there are cases in which they are not symmetric due to the influence of external disturbances. In this case, there are cases in which a regular distribution is not necessarily attained, as in the distribution examples shown in FIG. 14. As noted above, if the sampling number is increased, the possibility increases that a regular distribution is approached and the estimated value substantially matches the true value, but the true value is not necessarily matched. In this case, there is the possibility that there is a discrepancy to the true value if simply calculating the average value.

Therefore, in the present embodiment, before calculating the average value of the digital signal, the degree of skew from the distribution of the sampled digital signal is calculated in the control board 7 (Step 3), and it is judged whether the calculated degree of skew is within a preset tolerance range or not (Step 4). The degree of skew is an indicator for the distortion of the distribution, and indicates whether the distribution is distorted toward the positive or the negative side relative to a normal distribution.

It should be noted that the calculation at Step 3 and the determination at Step 4 are carried out here at a time when the sampling number of the signal has exceeded a predetermined threshold value. The threshold value for the sampling number is set for example to a value at which the estimation value has stabilized in FIG. 13. Setting the sampling number to be large (that is, shortening the sampling period), is advantageous in that the calculation of the average value can be accordingly carried out at an earlier stage, but if the eigenfrequency of the conveying system is low, then it is meaningless to set a large sampling number. That is to say, it is preferable to set the eigefrequency of the conveying system to be somewhat high.

If the result of the determination in Step 4 is that it is determined that the degree of skew is within the tolerance range (Step 4: YES), then the control board 7 breaks off the sampling of the signal and calculates the average value of all sampled digital signal values (Step 5), and calculates the weight of the postal matter P (Step 6). In this case, the weight measurement of the postal matter P can be finished at an earlier timing.

It should be noted that if it is determined in Step 4 that the degree of skew is within the tolerance range, and if the sampling number of the signal is less than a threshold value, then the procedure does not advance to the processing of Step 5 and the sampling of the signal is continued until the sampling number reaches the threshold value.

On the other hand, if it is determined in Step 4 that the degree of skew is outside the tolerance range (Step 4: NO), then the sampling of the signal is continued until it is determined that the front edge of the postal matter P in conveying direction has reached the nip of the conveying roller pair 42b that is adjacent to the downstream side to the conveying roller pair 20b on the downstream side on the support member 12, by detecting that front edge with a sensor that is not shown in the drawings (Step 7: YES), that is, until the weight of the postal matter P cannot be measured anymore, or until the degree of skew settles within the tolerance range.

Then, at the point in time when the front edge in conveying direction of the postal matter P has been handed over to the conveying roller pair 42b on the downstream side and the sampling of the signal is discontinued (Step 7: YES), or at the point in time when the degree of skew has entered the tolerance range during the sampling (Step 4: YES), the control board 7 calculates the average value of all sampled digital signal values (Step 5), and calculates the weight of the postal matter P (Step 6).

It should be noted that if it is judged in Step 7 that the front edge in conveying direction of the postal matter P has reached the nip of the conveying roller pair 42b while the signal is being sampled (in a state in which the degree of skew has not yet settled in the tolerance range), then the degree of reliability of the measurement result in view of the degree of skew calculated at this point is determined (Step 8), associated with the weight of the postal matter P calculated in Step 6, and the weight and the degree of reliability are output as the measurement result (Step 9).

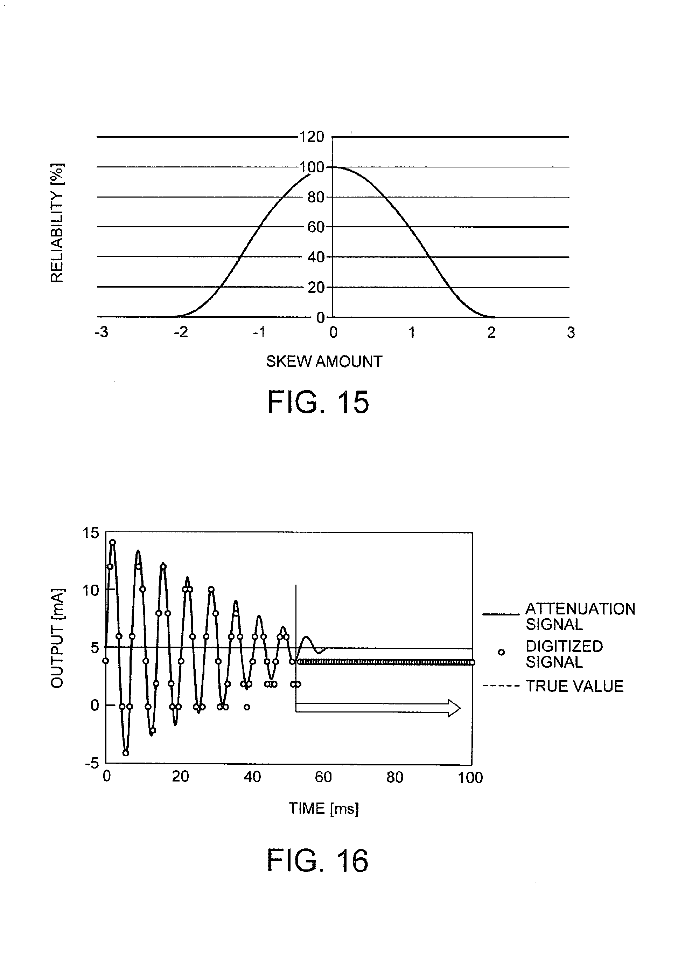

What is referred to here as "degree of reliability" is an indicator of the reliability of the measurement result including skew in the distribution, and may be predetermined as shown by the graph in FIG. 15, for example. For example, the data with the lowest reliability in FIG. 14 have a degree of skew of about 1.867, and the degree of reliability for this case is substantially zero.

As explained above, with the present embodiment, the weight of the postal matter P is measured by sampling and digitizing the output of the force sensor 16 sampled at a predetermined period, subjecting the plurality of discrete digital signal values to statistical processing and averaging them. Therefore, with the present embodiment, errors due to the digitization are cancelled out, a measurement result close to the true value can be obtained, and the weight of the postal matter P can be measured with high precision. That is to say, with the present embodiment, a measurement of a range is possible that cannot be detected by digitization of the signal, and a measurement with higher precision becomes possible.

On the other hand, if the result of measuring the weight is digitized after the vibrations of the conveying system have attenuated, then it may take a long time until the measurement of the weight of the postal matter P is started, as shown in FIG. 16 for example (until the vibrations are sufficiently static), which is unsuitable for high-speed processing of the postal matters P. Moreover, as shown in the example in FIG. 16, if the analog signal after the attenuation of the vibrations is digitized, then the error due to the digitization is included in the measurement result, so that it is not possible to measure the weight of the postal matters P with high precision.

Moreover, with the present embodiment, the digitized signal is output after averaging it after subjecting it to statistical processing, so that it is not necessary to increase the performance of the A/D converter board 6 that samples the output of the weight sensor 16. That is to say, with the present embodiment, it is possible to use a relatively inexpensive A/D converter board 6 and to output the measurement result with high reliability.

Moreover, with the present embodiment, there is no need to attenuate the vibrations of the conveying system, so that it is not necessary to provide an expensive vibration-damping mechanism or precise sensors, the device configuration can be made inexpensive while the strength can be increased, and the embodiment can be applied to mail processing machines that continuously convey a large amount of postal matters P within a short time at high speed.

Therefore, with the weight measuring device or weight measuring method of the present embodiment, it is possible to measure the weight with a relatively inexpensive configuration and high precision by subjecting the digitized signal values to statistical processing and determining their average.

While certain embodiments have been described, those embodiments have been presented by way of example only, and are not intended to limit the scope of the inventions. Indeed, the novel apparatuses described herein may be embodied in a variety of other forms; furthermore, various omissions, substitutions and changes in the form of the apparatuses described herein may be made without departing from the spirit of the inventions. The accompanying claims and their equivalents are intended to cover such forms or modifications as would fall within the scope and spirit of the inventions. For example, the sheet-like articles to be processed are not limited to postal matters, but may also be other types of sheet-like articles, such as cheques or bills. The rotating members that convey the sheet-like articles by sandwiching them in the conveying structure are not limited to conveying rollers, but also may be conveying belts or the like. The weight sensor is not limited to a force sensor, but also may be another type of sensor. Also, the vibration source is not limited to the motor and the roller pair, but also may be another type of vibration source.

Means for solving the problem of the present invention are listed in the following:
[1] A weight detecting device to receive a sheet-like article that is conveyed from an upstream side in a state in which it is sandwiched by rotating members, and to detect the weight of a sheet-like article, the weight detecting device comprising:
   a support member that is provided independently in a support path conveying the sheet-like article;
   a conveying structure to convey the sheet-like article sandwiched by the rotating members, the conveying structure being provided on the support member;
   a weight sensor to detect the weight of the conveying structure and the support member while the sheet-like article is being conveyed;
   a detector to detect at least a conveying speed of the sheet-like article at an upstream side conveying structure on the upstream side of the support member; and
   a control device to control the conveying speed of the conveying structure such that the conveying speed of the sheet-like article with the conveying structure matches the detected conveying speed, based on the speed information obtained with the detector.
[2] The weight detecting device according to [1], wherein the conveying structure includes a plurality of rotating members that convey the sheet-like article while sandwiching it, and a driving motor that rotates at least one of the rotating members,
   wherein the control device controls the rotation speed of the driving motor such that a difference between the conveying speed detected by the detector and the conveying speed of the sheet-like articles with the conveying structure becomes zero.
[3] The weight detecting device according to [1] or [2], wherein the detector comprises an encoder to detect a rotation speed of the rotating members in the upstream side conveying structure.
[4] The weight detecting device according to [1] or [2], wherein the detector comprises a tachogenerator to detect a rotation speed of the rotating members in the upstream-side conveying structure.
[5] The weight detecting device according to [1] or [2], wherein the detector comprises an optical sensor to detect a passage of the sheet-like article in the upstream-side conveying structure.
[6] A sheet processing apparatus comprising:
   an upstream side conveying structure to convey a sheet-like article while sandwiching the sheet-like article with a plurality of rotating members, the upstream-side conveying structure being provided in a conveying path to convey the sheet-like article;
   a downstream side conveying structure to convey the sheet-like article while sandwiching the sheet-like article with a plurality of rotating members, the downstream side conveying structure being provided in the conveying path; and
   a weight detecting device to receive the sheet-like article that is conveyed from the upstream side conveying structure, and to detect a weight of the sheet-like article, the weight detecting device being arranged at the conveying path between the upstream side conveying structure and the downstream side conveying structure;
   the weight detecting device comprising a support member that is provided independently in the support path; a conveying structure to convey the sheet-like article sandwiched by the rotating members, the conveying structure being provided on the support member; a weight sensor to detect the weight of the conveying structure and the support member while the sheet-like article is being conveyed; a detector to detect at least a conveying speed of the sheet-like article at the upstream side conveying structure; and a control device to control the conveying speed of the conveying structure such that the conveying speed of the sheet-like article with the conveying structure matches the detected conveying speed, based on the speed information obtained with the detector.
[7] The sheet processing apparatus according to [6], wherein the conveying structure includes a plurality of rotating members that convey the sheet-like article while sandwiching it, and a driving motor that rotates at least one of the rotating members,
   wherein the control device controls the rotation speed of the driving motor such that a difference between the conveying speed detected by the detector and the conveying speed of the sheet-like articles with the conveying structure becomes zero.

## Claims

1. A weight detecting device comprising:
a conveying portion (1) to convey a sheet-like article (P);
a vibration source (18a, 18b, 20a, 20b, 24) causing the conveying portion to oscillate;
a sensor (16) to detect a weight of the sheet-like article (P) while it is being conveyed by the conveying portion (1);
an A/D converter portion (6) to sample and digitize an output of the sensor (16) at a predetermined period; and
a calculating portion (7) to calculate a weight of the sheet-like article (P) by determining an average of a plurality of detection signal values digitized by the A/D converter portion (6) after subjecting the detection signal values to statistical processing.

2. The weight detecting device according to claim 1, wherein the A/D converter portion (6) samples the output of the sensor (16) at less than 1/2 of a vibration period of the vibrations that are applied by the vibration source (18a, 18b, 20a, 20b, 24) to the conveying portion (1) conveying the sheet-like article (P).

3. The weight detecting device according to claim 2, wherein the calculating portion (7) calculates a degree of skew of the plurality of digitized detection signal values, and adds a value representing a degree of reliability corresponding to this degree of skew to the calculation result that is output.

4. A weight detecting method comprising:
conveying a sheet-like article (P) with a conveying portion (1);
causing the conveying portion (1) to oscillate;
detecting a weight of the sheet-like article (P) while it is being conveyed;
sampling a detected signal at a predetermined period;
digitizing the sampled signal; and
calculating a weight of the sheet-like article (P) by determining an average of a plurality of the digitized detection signal values after subjecting the detection signal values to statistical processing.

5. The weight detecting method according to claim 4, wherein a sampling period for sampling the signal is less than 1/2 of a vibration period of the vibrations that are applied by a vibration source (18a, 18b, 20a, 20b, 24) to the conveying portion conveying the sheet-like article (P).

6. The weight detecting method according to claim 5, wherein the statistical processing includes calculating a degree of skew of the plurality of digitized detection signal values, and adding a value representing a degree of reliability corresponding to this degree of skew to the calculation result that is output.
